# EUROPEAN PATENT SPECIFICATION

(11) **EP 0 548 777 B1**
(45) Date of publication and mention of the grant of the patent: **20.05.1998**
(21) Application number: 92121402.9
(22) Date of filing: 16.12.1992
(51) Int. Cl.: G05B 19/418, G06F 11/27

(54) **Fault identification system for production and packing plants**
System zur Fehlererkennung für eine Herstellungs- und Verpackungsanlage
Système d'identification des malfonctions sur un site de production et d'emballage

(30) Priority: 20.12.1991 IT BO910481
(43) Date of publication of application: 30.06.1993
(73) Proprietor: G.D SOCIETA' PER AZIONI, I-40133 Bologna (IT)
(72) Inventor: Neri, Armando, I-40100 Bologna (IT); Mantilli, Cinzia, I-40100 Bologna (IT); Lipparini, Luca, I-40013 Castel Maggiore (IT)
(74) Representative: Jorio, Paolo, Dr. Ing.

(56) References cited:
- EP-A- 0 428 135
- WO-A-90/05337
- MILCOM 87 / 1987 IEEE MILITARY COMMUNICATIONS CONFERENCE vol. 1, october 19-22,
- 1987, WASHINGTON, D. C. pages 167 - 175 , XP44685 B. W. OTIS AND H. M. HEGGESTAD 'the expert tech controller : a network control expert system'
- THE ANNUAL AI SYSTEMS IN GOVERNMENT CONFERENCE march 27-31, 1989, WASHINGTON, D.C. pages 175 - 178 , XP40026 MATTHEW R. BARRY 'px1 : a space shuttle mission operations knowledge-based system project'

## Description

The present invention relates to a fault identification system for production and packing plants, as defined in the preamble of claim 1.

The complex, sophisticated design and high speed of the machinery in plants of the aforementioned type, e.g. for producing cigarettes from raw materials (tobacco, reels of strip paper and other packing materials), makes fault finding increasingly difficult, which problem is further compounded when the plant consists of several in-line machines differing in function, or when several plants of slightly different characteristics are operated in the same environment.

Nor are detailed machine specifications and handbooks sufficient -for solving the problem. Indeed, the enhanced efficiency of such machinery provides not only for reducing the frequency with which faults occur, but also for reducing the intervention frequency and consequently also the practical experience required by technical personnel for rapidly locating and rectifying faults on the machinery.

As such, any advantages to be gained in terms of breakdown frequency and downtime by enhancing the efficiency of the machinery are in danger of being at least partly offset by greater difficulty in locating and rectifying faults occurring rarely on the machinery.

A system of the type defined in the preamble of claim 1 is disclosed in WO-A-90/05337, the system comprising records which pre-define events which can occur prior to a predefined event occurring and critical parameters which should occur to recognize an event. No indication of tests to be performed by a user is given, nor the intervention of technical personnel is provided for.

EP-A-0 428 135 describes a fault diagnosis apparatus and method using a fault tree setting a plurality of choices to one question associated with a cause of a fault, answers and choices branch off each of the choices and final choices reach causes of the fault. Fault repair items are stored. No tests are performed by the personnel on the suggestion of the system.

It is an object of the present invention to provide a fault identification system for guiding and assisting technical personnel in locating and rectifying faults on the plant, and so reducing downtime for maintenance or repair.

According to the present invention, there is provided a fault identification system for production and packing plants, according to claim 1.

A non-limiting embodiment of the present invention will be described by way of example with reference to the accompanying drawings, in which:
Fig.1 shows a schematic view in perspective of a plant to which the system according to the present invention is applied;
Fig.2 shows a simplified block diagram of the system according to the present invention;
Fig.3 shows a diagram of part of the system according to the present invention;
Fig.4 shows the approach adopted by the system according to the present invention;
Fig.5 shows an operation flow chart of the system according to the present invention.

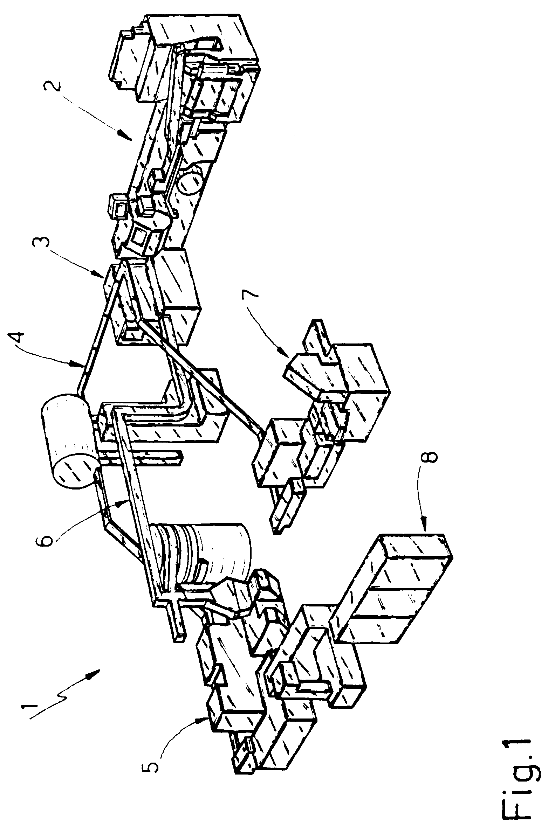

Number 1 in Fig.1 indicates, by way of example, a typical cigarette manufacturing and packing plant to which the system according to the present invention may be applied. In the example shown, plant 1 comprises in cascade formation: a production machine 2 for producing cigarettes from tobacco and reels of paper; a filter assembly machine 3 for applying filters to the cigarettes from machine 2; a first conveyor 4 with a storage system; a packing machine 5 for forming single packets of cigarettes; a second conveyor 6 also featuring a storage system; an overwrapping and cartoning machine 7 for overwrapping and forming the single packets into cartons; and an electronic control unit 8 for controlling overall operation of the plant.

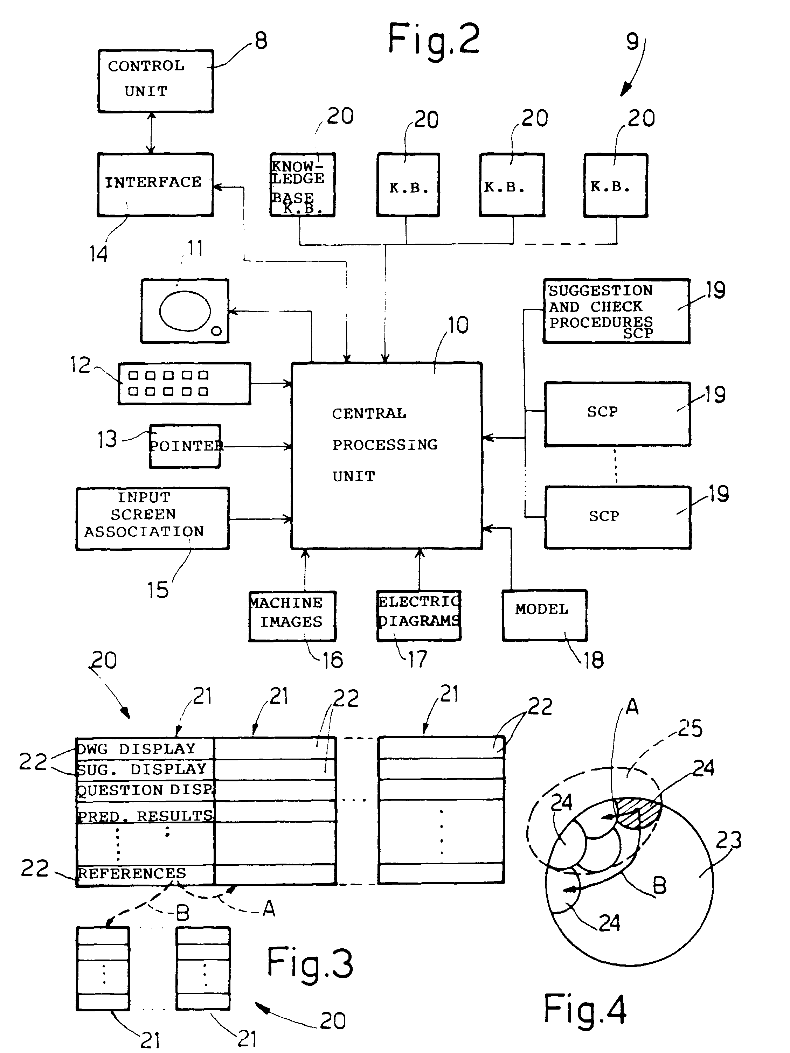

With reference to Fig.2, the fault identification system, indicated as a whole by 9, comprises a central processing unit 10 one-way-connected to a monitor 11, to a keyboard 12, and to a pointer element (mouse) 13. In the example shown, central processing unit 10 is also two-way-connected to an interface 14 for exchanging messages and instructions with control unit 8, e.g. for acquiring alarm messages or fault signals, requesting further information or acquiring the results of tests performed automatically by the plant.

Central processing unit 10 is also connected to a number of memory elements, each containing data, information and instructions required by central processing unit 10 for identifying faults on plant 1 and generating an intervention strategy for rectifying the same.

More specifically, central processing unit 10 is one-way-connected to:
- an element 15 for associating portions of screen 11 and other variables, such as messages or plant parts displayed on the screen, or references to other display pages;
- an element 16 for showing the mechanical structure of the machinery of plant 1, as well as machine parts in various detail;
- an element 17 relative to the electric diagrams of the machinery of plant 1;
- an element 18 relative to the plant model, i.e. the relationship between the fault messages generated by plant 1 and the plant components from which the messages may originate;
- a number of elements 19 relative to suggestion and check procedures available in the event of a fault; each element 19 being related to a specific problem group relative to a given part of the plant; and
- a number of elements 20 (knowledge bases KB) relative to rules to be checked out in each case, for identifying the fault.

Each element 20 generally comprises a number of "rules" or sets of instructions and conditions to be checked, and which are arranged in order of priority on a message-fault probability basis (according to experience) and according to the cost of the check in terms of time, expense and complexity.

The Fig.3 diagram shows one of elements 20 including a number of rules stored in respective areas 21. Each area 21 is in turn divided into a number of fields 22 containing, as shown by way of example in Fig.3, successive instructions for: displaying the mechanical structure of the machine, machine diagrams, or the part of the machine which, according to various criteria, is responsible for the message or fault; displaying user-assist test suggestions for identifying the cause of the fault; displaying questions relative to the test results; if necessary, displaying further suggestions and result requests for performing further tests; and referring to other (lower priority level) rules in the same element 20, or to a different element 20 in the event the rule fails to be verified (nonmatching of the user-entered and predicted test results). For this purpose, each rule 21 also contains predicted test results, and consequently the instructions required by central processing unit 10 for determining, in each case, whether the rule being implemented is true or false, i.e. whether the fault has been identified or the search is to be continued.

Fig.4 illustrates the manner in which the system according to the present invention "views" plant 1 for fault identification purposes. More specifically, 23 in Fig.4 indicates a whole consisting of a number of sections 24, which are generally formed into groups 25 (only one of which is shown) as illustrated by the dotted line. Each section 24 relates to a small portion (even one component) of the plant, and combines the mechanical and electrical design characteristics (stored in memory elements 16, 17 in Fig. 2), the types of fault to which the plant portion is subject (stored in elements 20 in Fig.2), and the fault-plant component relationship (stored in block 18). Each group 25, on the other hand, combines the machine parts correlated on a possible fault basis. More specifically, each group 25 is assigned a respective memory element 20, i.e. combines the types of fault (together with the check procedures and other information) combined in one element 20. In other words, whole 23 represents a description of the machine as formed, for the purpose of fault identification, by associating elements 16-18 and 20 in Fig. 2, and is useful for understanding the approach adopted by the system according to the present invention.

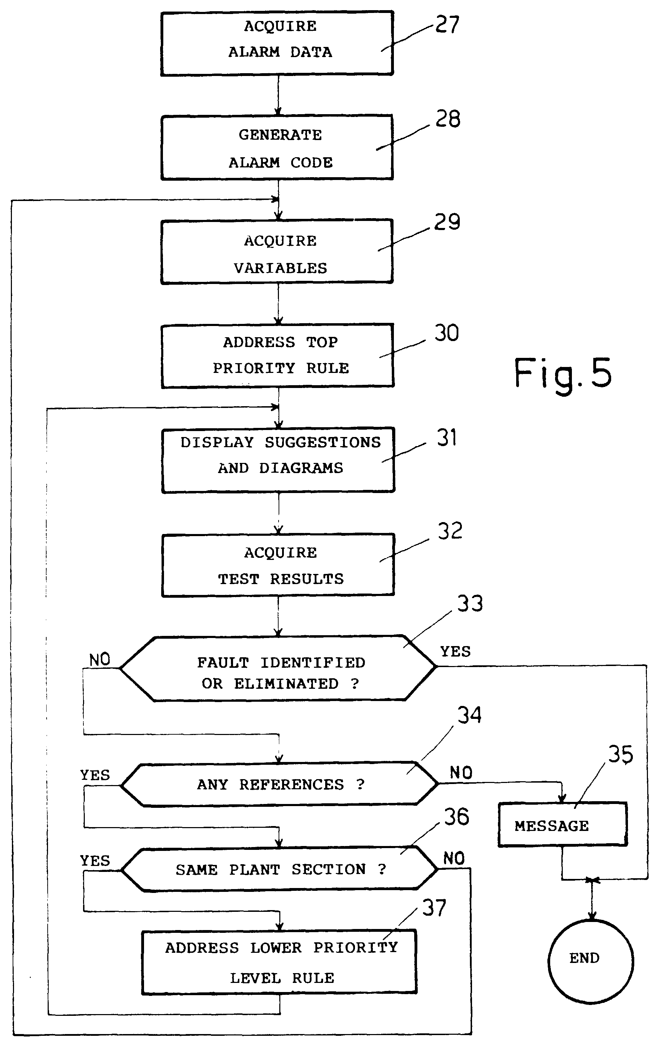

Operation of the system will now be described with reference to the flow chart in Fig.5.

To begin with, system 9 (block 27) provides for acquiring data and information. That is, on the basis of information supplied by the user via keyboard 12 and/or mouse 13, or on the basis of signals received from interface 14, the system determines the type of plant on which the fault has occurred (in the case of a number of different independently operating plants); determines the type of problem involved, i.e. whether a fault has occurred, whether one of the actuators on the plant has generated an alarm message, or whether the user simply wishes to display the machine structure and/or diagrams for instruction purposes; selects the specific machine on the plant in question; and (in the case of an alarm message) determines the specific element responsible for generating the message.

On the basis of the above selections, central processing unit 10 generates a code relative to a group of problems possibly responsible for generating the alarm message (block 28), which phase amounts to isolating, from whole 23, a group 25 of faults and plant components/parts most likely to have generated the alarm message. On the basis of this selection, central processing unit 10 acquires from memory element 18 the value of predetermined variables (block 29) indicating which memory element 20 is to be consulted first, which rule 21 of said memory element 20 has the highest priority, which actuator on the plant has generated the alarm message, and which parts of memory elements 16 and 17 are involved (for selecting the mechanical and electric diagrams of the machine and machine parts involved).

On the basis of the above variables, central processing unit 10 loads the highest priority rule 21 of memory element 20 in question (block 30) and "applies" it, i.e. performs the instructions specified in fields 22 of rule 21. To begin with, therefore, central processing unit 10 displays the mechanical and electrical parts involved, by addressing elements 16 and 17 as specified previously, and displays test suggestions using the memory elements 19 whose address is specified in rule 21 (block 31 in Fig.5). At this point, system 9 requests the user to enter the test results which are accordingly acquired in block 32. On the basis of the user-entered and predicted results (relative to a given fault), block 33 of central processing unit 10 determines whether the fault has been identified (matching user-entered and predicted results and/or elimination of the alarm message) and, in the event of a positive check (rule 21 verified and corresponding to the YES output of block 32) terminates the fault identification procedure.

Conversely (NO output of block 33), on the basis of the user-entered test results, system 9 may either refer to another lower priority rule in the same memory element 20; or identify a further variable value (if the fault is found to lie in a different part of the machine); or terminate the procedure on the grounds, for example, that the type of fault in question has not been provided for and, thus, cannot be identified by the system. For this purpose, system 9 determines whether other references exist to further rules or elements 20 (block 34), and, in the event of a negative response, generates a user message (block 35) and terminates the procedure. Conversely, in the event of a positive response, block 34 goes on to block 36 which discriminates between references to other rules in the same element 20 or to other elements 20. In the case of a reference to other rules in the same element 20, block 36 goes on to block 37, which addresses the next rule 21 down in order of priority, and returns to block 31 (which corresponds to the reference indicated by arrows A in Figs. 3 and 4 and respectively relative to successive application of rules 21 and to the passage from one section 24 to another in the same group 25). Conversely, in the case of a reference to other elements 20, block 36 returns to block 29 (which corresponds to the reference indicated by arrows B in Fig.s 3 and 4 and respectively relative to the passage from one memory element 20 to another and from one section 24 to another in a different group 25).

By repeating the above procedure according to the instructions in each rule 21, at the end of the procedure, the fault is either identified and possibly solved, or, in exceptional cases, fails to be identified by the system.

The system according to the present invention thus provides for simplifying fault finding procedures by commencing with the most likely or at any rate the most easily verifiable causes; for drastically reducing downtime with no need for experienced technicians; and for enabling the formation of skilled personnel with a sound knowledge of the machine.

The system structure provides for troublefree updating, particularly in the case of additions to or modernization of the plant machinery; while, using an interface 14 (Fig.2) capable of automatically supplying central processing unit 10 with at least some of the signals and quantities required for testing, the system described provides for a high degree of automation of the fault finding process as a whole.

## Claims

1. A fault identification system (9) for production and packing plants (1), comprising alarm acquisition means (27) for acquiring alarm data; problem recognition means (28-31) and signalling means (11),
characterized in that said problem recognition means (28-31) comprises means for determining tests to be performed by the user on the plant; result acquisition means (32) for acquiring the actual test results; fault identification means (33) for comparing said actual test results with predicted results;
and in that said signalling means (11) are enabled by said identification means in the event said actual test results match said predicted results.

2. A system as claimed in Claim 1, characterized by the fact that said problem recognition means (28-31) comprise a number of memory areas (21) mutually connected on a priority basis according to the probability of a given fault occurring and according to the cost of verifying the existence of said given fault.

3. A system as claimed in Claim 1 or 2, characterized by the fact that said problem recognition means (28-31) comprise alarm generating means (28) for generating an alarm code specifying a group of faults and/or parts associated with said alarm data; and variable generating means (29) for generating a number of variables specifying a section (24) of a plant-fault whole (23).

4. A system as claimed in Claim 3, characterized by the fact that it comprises a number of first memory elements (20), each divided into a number of memory areas (21) mutually connected on a priority basis and containing respective rules, each associated with a given fault; and by the fact that said variable generating means (29) are connected to and enable the highest priority rule in one of said first memory elements (20).

5. A system as claimed in Claim 4, characterized by the fact that it comprises second memory elements (16) for memorizing images of the mechanical structure of the plant; third memory elements (17) for memorizing electric diagrams of the plant; and fourth memory elements (19) for memorizing suggestion and check procedures; and by the fact that each said memory area (21) comprises a number of fields (22) including a first field for addressing said second and third memory elements (16, 17); a second field for addressing said fourth memory elements (19); and a third field (A, B) for referring to other memory areas in the same first memory element (20) or in other first memory elements.

6. A system as claimed in one of the foregoing Claims from 2 to 5, characterized by the fact that it comprises a number of said problem recognition means (29-32, 20) associated with given alarm data and enabled selectively by said variable generating means (28); and by the fact that it comprises first check means (34) enabled by said problem recognition means (29-32, 20) in the event said actual test results fail to match said predicted results, and designed to determine the existence of other fault references.

7. A system as claimed in Claim 6, characterized by the fact that it comprises second check means (36) enabled by said first check means (34) in the event other fault references exist, and designed to selectively enable one of said problem recognition means (29-31).

8. A fault identification method for production and packing plants, comprising the step ofacquiring alarm data; characterized by the steps of : determining tests to be performed by the user on the plant; acquiring the actual test results; comparing said actual test results with predicted results; and generating fault identification messages in the event said actual test results match said predicted results.

9. A method as claimed in Claim 8, characterized by the fact that it comprises a stage wherein each possible fault is assigned a priority level, according to the probability of said fault occurring and the cost of verifying said fault, and a predetermined check procedure; and by the fact that said test determining stage comprises a stage consisting in addressing the highest priority check procedure.

10. A method as claimed in Claim 9, characterized by the fact that it comprises a stage consisting in repeatedly addressing increasingly lower priority check procedures, in the event said actual test results fail to match said predicted results, until the fault is finally identified.

## Patentansprüche

1. Fehlererkennungssystem (9) für Herstellungs- und Verpackungsanlagen (1), mit Alarmerfassungsmitteln (27) zur Erfassung von Alarmdaten, Problemerkennungsmitteln (28 bis 31) und Signalisierungsmitteln (11), **dadurch gekennzeichnet, daß** die Problemerkennungsmittel (28 bis 31) Mittel zur Bestimmung von durch den Benutzer der Anlage auszuführenden Tests, Ergebniserfassungsmittel (32) zur Erfassung der tatsächlichen Testergebnisse und Fehlererkennungsmittel (33) zum Vergleich der tatsächlichen Testergebnisse mit vorhergesagten Ergebnissen aufweisen und daß die Signalisierungsmittel (11) durch die Erkennungsmittel in dem Fall aktiviert werden, daß die tatsächlichen Testergebnisse mit den vorhergesagten Ergebnissen übereinstimmen.

2. System nach Anspruch 1, **dadurch gekennzeichnet, daß** die Problemerkennungsmittel (28 bis 31) eine Anzahl von Speichergebieten (21) aufweisen, die miteinander auf einer Prioritätsbasis entsprechend der Wahrscheinlichkeit des Auftretens eines gegebenen Fehlers und entsprechend den Kosten der Verifizierung des Auftretens des gegebenen Fehlers verbunden sind.

3. System nach Anspruch 1 oder 2, **dadurch gekennzeichnet, daß** die Problemerkennungsmittel (28 bis 31) Alarmerzeugungsmittel (28) zur Erzeugung eines eine Gruppe von Fehlern und/oder Teilen, die mit den Alarmdaten verknüpft sind, spezifizierenden Alarmcodes und Variablenerzeugungsmittel (29) zur Erzeugung einer Anzahl von Variablen aufweisen, die eine Sektion (24) einer Anlagen-Fehler-Gesamtheit (23) spezifizieren.

4. System nach Anspruch 3, **dadurch gekennzeichnet, daß** es eine Anzahl von ersten Speicherelementen (20) aufweist, die jeweils in einer Anzahl von Speicherbereichen (21) aufgeteilt sind, welche miteinander auf einer Prioritätsbasis verbunden sind und jeweils Regeln enthalten, von denen jede mit einem gegebenen Fehler verbunden ist, und daß die Variablenerzeugungseinrichtung (29) mit der Regel höchster Priorität in einem der ersten Speicherelemente (20) verbunden ist und diese aktiviert.

5. System nach Anspruch 4, **dadurch gekennzeichnet, daß** es zweite Speicherelemente (16) zum Speichern von Bildern des mechanischen Aufbaus der Anlage, dritte Speicherelemente (17) zum Speichern elektrischer Schaltbilder der Anlage und vierte Speicherelemente (19) zum Speichern von Vorschlägen und Prüfprozeduren aufweist und daß jedes Speichergebiet (21) eine Anzahl von Feldern (22) aufweist, die ein erstes Feld zur Adressierung der zweiten und dritten Speicherelemente (16, 17), ein zweites Feld zur Adressierung der vierten Speicherelemente (19) und ein drittes Feld (A, B) zur Bezugnahme auf andere Speichergebiete in demselben ersten Speicherelement (20) oder in anderen ersten Speicherelementen aufweisen.

6. System nach einem der vorangehenden Ansprüche 2 bis 5, **dadurch gekennzeichnet, daß** es eine Anzahl von Problemerkennungsmitteln (29 bis 32, 20) aufweist, die mit gegebenen Alarmdaten verknüpft sind und selektiv durch die Variablenerzeugungseinrichtung (28) aktiviert werden, und daß es erste Prüfmittel (34) aufweist, die durch die Problemerkennungsmittel (29 bis 32, 20) in dem Fall aktiviert werden, daß tatsächliche Testergebnisse nicht mit vorhergesagten Ergebnissen übereinstimmen, und die so gestaltet sind, daß sie das Vorhandensein anderer Fehler-Bezugnahmen bestimmen.

7. System nach Anspruch 6, **dadurch gekennzeichnet, daß** es zweite Prüfmittel (36) aufweist, die durch die ersten Prüfmittel (34) in dem Falle aktiviert werden, daß andere Fehler-Bezugnahmen existieren, und die so gestaltet sind, daß sie selektiv eines der Problemerkennungsmittel (29 bis 31) aktivieren.

8. Fehleridentifizierungsverfahren für Herstellungs- und Verpackungsanlagen, das den Schritt der Erfassung von Alarmdaten aufweist, **gekennzeichnet durch** die Schritte: Bestimmung von durch den Nutzer an der Anlage auszuführenden Tests, Erfassen der tatsächlichen Testergebnisse, Vergleichen der tatsächlichen Testergebnisse mit vorhergesagten Ergebnissen und Erzeugen von Fehlererkennungsnachrichten in dem Fall, daß die tatsächlichen Testergebnisse mit den vorhergesagten Ergebnissen übereinstimmen.

9. Verfahren nach Anspruch 8, **dadurch gekennzeichnet, daß** es einen Schritt aufweist, in dem jedem möglichen Fehler ein Prioritätsniveau entsprechend der Wahrscheinlichkeit des Auftretens des Fehlers und der Kosten der Verifizierung des Fehlers und eine vorbestimmte Prüfprozedur zugeordnet wird und daß der Testbestimmungsschritt einen Schritt aufweist, der in der Adressierung der Prüfprozedur mit der höchsten Priorität besteht.

10. Verfahren nach Anspruch 9, **dadurch gekennzeichnet, daß** es eine Stufe aufweist, die in der wiederholten Adressierung von Prüfprozeduren mit zunehmend niedrigerer Priorität in dem Fall aufweist, daß die tatsächlichen Testergebnisse und die vorhergesagten Ergebnisse nicht übereinstimmen, bis der Fehler schließlich erkannt ist.

## Revendications

1. Système d'identification de défaillance (9) pour des sites de production et d'emballage (1), comprenant des moyens d'acquisition d'alerte (27) pour acquérir des données d'alerte; des moyens de reconnaissance de problèmes (28-31); et des moyens de signalisation (11),
caractérisé en ce que lesdits moyens de reconnaissance de problèmes (28-31) comprennent des moyens pour déterminer des tests à effectuer par l'utilisateur sur le site, des moyens d'acquisition de résultats (32) pour acquérir les résultats réels des tests; des moyens d'identification de défaillance (33) pour comparer lesdits résultats réels des tests à des résultats prédits;
et en ce que lesdits moyens de signalisation (11) sont validés par lesdits moyens d'identification dans le cas où lesdits résultats réels des tests concordent avec lesdits résultats prédits.

2. Système selon la revendication 1, caractérisé par le fait que lesdits moyens de reconnaissance de problèmes (28-31) comprennent plusieurs zones de mémoire (21) mutuellement connectées sur une base de priorité selon la probabilité d'une défaillance donnée se produisant et selon le coût de vérification de l'existence de ladite défaillance donnée.

3. Système selon la revendication 1 ou 2, caractérisé par le fait que lesdits moyens de reconnaissance de problèmes (28-31) comprennent des moyens de génération d'alerte (28) pour générer un code d'alerte spécifiant un groupe de défaillances et/ou de pièces associées auxdites données d'alerte; et des moyens de génération de variables (29) pour générer plusieurs variables spécifiant une section (24) d'un ensemble (23) site-défaillance.

4. Système selon la revendication 3, caractérisé par le fait qu'il comprend plusieurs premiers éléments de mémoire (20), chacun divisé en plusieurs zones de mémoire (21) mutuellement connectées sur une base de priorité et contenant des règles respectives, chacune associée à une défaillance donnée; et par le fait que lesdits moyens de génération de variables (29) sont connectés à et valident la règle de priorité la plus élevée dans un desdits premiers éléments de mémoire (20).

5. Système selon la revendication 4, caractérisé par le fait qu'il comprend plusieurs deuxièmes éléments de mémoire (16) pour mémoriser des images de la structure mécanique du site; des troisième éléments de mémoire (17) pour mémoriser des schémas électriques du site; et des quatrièmes éléments de mémoire (19) pour mémoriser des procédures de suggestion et de contrôle; et par le fait que chaque dite zone de mémoire (21) comprend plusieurs champs (22) comportant un premier champ pour l'adressage desdits deuxièmes et troisièmes éléments de mémoire (16, 17); un deuxième champ pour l'adressage desdits quatrièmes éléments de mémoire (19); et un troisième champ (A, B) pour se référer à d'autres zones de mémoire dans le même premier élément de mémoire (20) ou dans d'autres premiers éléments de mémoire.

6. Système selon l'une quelconque des revendications précédentes 2 à 5, caractérisé par le fait qu'il comprend plusieurs desdits moyens de reconnaissance de problèmes (29-32, 20) associés à des données d'alerte données et validés sélectivement par lesdits moyens de génération de variables (28); et par le fait qu'il comprend des premiers moyens de contrôle (34) validés par lesdits moyens de reconnaissance de problèmes (29-32, 20) dans le cas où la concordance desdits résultats réels des tests et desdits résultats prédits échoue, et conçus pour déterminer l'existence d'autres références de défaillances.

7. Système selon la revendication 6, caractérisé par le fait qu'il comprend des deuxièmes moyens de contrôle (36) validés par lesdits premiers moyens de contrôle (34) dans le cas où d'autres références de défaillances existent, et conçus pour valider sélectivement un desdits moyens de reconnaissance de problèmes (29-31).

8. Procédé d'identification de défaillance pour des sites de production et d'emballage, comprenant l'étape d'acquisition de données d'alerte; caractérisé par les étapes de : détermination de tests à effectuer par l'utilisateur sur le site; acquisition des résultats réels des tests; comparaison desdits résultats réels des tests et de résultats prédits; et génération de messages d'identification de défaillance dans le cas où lesdits résultats réels des tests concordent avec lesdits résultats prédits.

9. Procédé selon la revendication 8, caractérisé par le fait qu'il comprend une étape dans laquelle, à chaque défaillance possible, est affecté un niveau de priorité, selon la probabilité de ladite défaillance se produisant et le coût de vérification de ladite défaillance, et une procédure de contrôle prédéterminée; et par le fait que ladite étape de détermination de tests comprend une étape consistant en l'adressage de la procédure de contrôle de priorité la plus élevée.

10. Procédé selon la revendication 9, caractérisé par le fait qu'il comprend une étape consistant en l'adressage répétitif de procédures de contrôle de priorité de plus en plus basse, dans le cas où la concordance desdits résultats réels des tests et desdits résultats prédits échoue, jusqu'à ce que la défaillance soit finalement identifiée.
